# EUROPÄISCHE PATENTANMELDUNG

(11) **EP 2 745 748 A1**
(43) Veröffentlichungstag der Anmeldung: **25.06.2014**
(21) Anmeldenummer: 12198778.8
(22) Anmeldetag: 20.12.2012
(51) Int. Cl.: A47J 31/06, A47J 31/40

(54) **Getränkezubereitungsvorrichtung und Getränkekartusche**

(71) Anmelder: tokimeki GmbH, 4052 Basel (CH)
(72) Erfinder: Theim, Sebastian, 91207 Lauf an der Pegnitz (DE)
(74) Vertreter: Latscha Schöllhorn Partner

(57) **Zusammenfassung**

Eine Getränkezubereitungsvorrichtung 1 umfasst eine Kartuschenbrüheinheit 3 und eine Kartuschenhalterung 32, wobei die Kartuschenhalterung 32 mit in der Kartuschenbrüheinheit 3 anordbaren Haltemitteln zum Halten einer Getränkekartusche 5 versehen ist. Die Kartuschenbrüheinheit 3 umfasst einen mit einer Flüssigkeit befüllbaren Ziehbehälter 31 und eine Rühreinrichtung, wobei die Haltemittel der Kartuschenhalterung 32 im Innern des Ziehbehälters 31 in einem Kartuschenbereich 311 des Ziehbehälters 31 anordbar sind und die Rühreinrichtung zum Verursachen einer Strömung im Kartuschenbereich 311 des Ziehbehälters 31 ausgestaltet ist. Die Ausgestaltung der Kartuschenbrüheinheit und der Kartuschenhalterung der erfindungsgemässen Getränkezubereitungsvorrichtung erlaubt, dass die Getränkekartusche über einen bestimmten vordefinierbaren Zeitraum hinweg in einer in den Ziehbehälter eingefüllte Flüssigkeit ziehen kann. Dies lässt eine bevorzugte und insbesondere im Vergleich zu einem reinen Durchlauf beziehungsweise Durchspülen verbesserte Aromatisierung der Flüssigkeit zu. Insbesondere bei der Verwendung von Teesorten beziehungsweise -gemischen ermöglicht dies eine Verbesserung der Qualität des zubereiteten Getränks. Dabei ermöglicht die Rühreinrichtung, dass die Getränkekartusche laufend von der Flüssigkeit umspült wird, was eine effiziente und effektive Aromatisierung der Flüssigkeit und eine effiziente Getränkezubereitung ermöglicht.

## Beschreibung

### Technisches Gebiet

Die Erfindung betrifft eine Getränkezubereitungsvorrichtung gemäss dem Oberbegriff des unabhängigen Anspruchs 1 sowie eine Getränkekartusche für eine solche Getränkezubereitungsvorrichtung. Getränkezubereitungsvorrichtungen dieser Art sind typischerweise mit einer Kartuschenbrüheinheit und einer Kartuschenhalterung ausgestattet, wobei die Kartuschenhalterung mit in der Kartuschenbrüheinheit anordbaren Haltemitteln zum Halten einer Getränkekartusche versehen ist. Damit können sie zum automatisierten Zubereiten von Getränken und insbesondere von Heissgetränken eingesetzt werden.

### Stand der Technik

Für die automatisierte Zubereitung von Heissgetränken werden heutzutage häufig automatische beziehungsweise elektrische Maschinen eingesetzt, die mit Kartuschen beziehungsweise Kapseln oder Pads beladen werden. Die Aromastoffe wie beispielsweise Kaffee sind dabei portionenweise in die Kartuschen abgefüllt und für die Zubereitung einer Portion wie beispielsweise einer Tasse des Heissgetränks wird eine Kartusche in der Maschine angeordnet und von der Maschine verarbeitet.

Bei der Verwendung solcher Getränkezubereitungsmaschinen wird jeweils eine Kartusche typischerweise in einer Kartuschenhalterung angeordnet und bestimmungsgemäss in der Getränkezubereitungsmaschine platziert. Bei der Verarbeitung der Kartusche wird der Inhalt der Kartusche in einer Kartuschenbrüheinheit der Getränkezubereitungsmaschine unter bestimmten Druck- und Temperaturverhältnissen von Wasser durchdrungen beziehungsweise durchspült. Insbesondere wird das Wasser dabei auf einer Seite der Kartusche in die Kartusche eingebracht, durchdringt die Kartusche und auf der anderen Seite verlässt das Wasser die Kartusche wieder, wo es als zubereitetes Getränk gesammelt wird. Beim Durchdringen beziehungsweise Durchspülen der Kartusche wird das Wasser durch die in der Kartusche angeordneten Aromastoffe aromatisiert und das Wasser wird zum Getränk aufbereitet.

Bei der Zubereitung verschiedener Arten von Getränken beziehungsweise verschiedener Komponenten eines Mischgetränks in einer einzigen Maschine stellt sich häufig das Problem, dass je nach Getränkeart beziehungsweise verwendeter Aromastoffe die Verarbeitungsbedingungen angepasste sein müssen, damit eine passende Zubereitung möglich ist. Dazu werden bei gewissen Systemen die Kartuschen mit einem Code versehen, der Aufschluss über den Inhalt der Kartusche beziehungsweise über dessen angepasste Verarbeitungsbedingungen gibt. Die zugehörigen Getränkezubereitungsmaschinen lesen diesen Code dann vor der Verarbeitung der Kartusche aus und passen die Verarbeitungsbedingungen entsprechend an. Beispielsweise ist in der DE 60 2005 001 139 T2 eine Getränkezubereitungsmaschine beschrieben, die insbesondere ermöglichen soll, dass beispielsweise Kaffeekartuschen und Milchkartuschen nacheinander verarbeitet werden sollen, wobei die Betriebsbedingungen über einen auf den Kartuschen angebrachten Code automatische je nach Kartusche an die Kaffeezubereitung oder an die Milchzubereitung beziehungsweise Milchschaumzubereitung angepasst werden.

Insbesondere bei der Zubereitung gewisser Getränke wie beispielsweise verschiedener Teesorten kann eine Verarbeitung der Kartuschen nach der oben beschriebenen in bekannten Getränkezubereitungsmaschinen durchgeführten Art nachteilig sein. Beispielsweise führt die Zubereitung von Tee in solchen Getränkezubereitungsmaschinen häufig zu unbefriedigenden Resultaten. Verschiedene Teesorten sollten idealerweise auf schonende andere Art zubereitet werden, wie sie in herkömmlichen Getränkezubereitungsmaschinen nicht möglich ist. Um dem beizukommen, werden insbesondere bei der Teezubereitung die Aromastoffe für die Kartuschen aufbereitet beziehungsweise behandelt, was diese ebenfalls beeinträchtigen kann.

Zudem sind solche Getränkezubereitungsmaschinen häufig auch eingeschränkt bezüglich der Art der Zubereitung. Zwar erlauben sie wie oben beschrieben teilweise eine Anpassung der Verarbeitungsbedingungen, eine Anpassung der Zubereitungsart ist aber zumeist nicht möglich.

Der vorliegenden Erfindung liegt daher die Aufgabe zu Grunde, eine Getränkezubereitungsvorrichtung beziehungsweise ein Getränkezubereitungssystem vorzuschlagen, die beziehungsweise das eine flexibel auf bestimmte Getränke angepasste Zubereitung erlaubt.

### Darstellung der Erfindung

Die Aufgabe wird erfindungsgemäss durch eine Getränkezubereitungsvorrichtung gelöst, wie sie durch die Merkmale des unabhängigen Anspruchs 1 definiert ist, sowie durch eine Getränkekartusche, wie sie durch die Merkmale des unabhängigen Anspruchs 12 definiert ist. Vorteilhafte Ausführungsvarianten der Erfindung ergeben sich aus den abhängigen Ansprüchen.

Das Wesen der Erfindung besteht im Folgenden: Eine Getränkezubereitungsvorrichtung umfasst eine Kartuschenbrüheinheit und eine Kartuschenhalterung, wobei die Kartuschenhalterung mit in der Kartuschenbrüheinheit anordbaren Haltemitteln zum Halten einer Getränkekartusche versehen ist. Die Kartuschenbrüheinheit umfasst insbesondere einen mit einer Flüssigkeit befüllbaren Ziehbehälter und eine Rühreinrichtung, wobei die Haltemittel der Kartuschenhalterung im Innern des Ziehbehälters in einem Kartuschenbereich des Ziehbehälters anordbar sind und die Rühreinrichtung zum Verursachen einer Strömung im Kartuschenbereich des Ziehbehälters ausgestaltet ist.

Die Getränkezubereitungsvorrichtung kann insbesondere eine automatische beziehungsweise elektronische Getränkezubereitungsvorrichtung beziehungsweise Getränkezubereitungsmaschine sein. Unter dem Begriff "Getränkekartusche" wird im Zusammenhang mit der Erfindung eine Kartusche verstanden, die zur Zubereitung eines Getränks dienende Aromastoffe und eventuell weitere Substanzen wie beispielsweise gesundheitsfördernde Substanzen umfasst. Solche Kartuschen können starr, halbstarr, oder flexibel beispielsweise als Pads im Wesentlichen kissenförmig ausgestaltet sein. Insbesondere kann die Getränkekartusche eine wasserdurchlässige beispielsweise netzförmige beziehungsweise gewobene Hülle aufweisen, in der die Aromastoffe und/oder die weiteren Substanzen angeordnet sind. Die netzförmige Hülle kann dabei aus zwei an ihren Randbereichen miteinander verbundenen beispielsweise runden Geweben beziehungsweise Gewebestoffen gebildet sein. Die Hülle kann aus einem recyclierbaren und/oder kompostierbaren Material hergestellt sein.

Als Aromastoffe beziehungsweise gesundheitsfördernde Substanzen können beispielsweise klassische Teesorten wie Mate, Assam, Darjeeling, Ceylon, Jasmin, English Broken, Grüntee, Oolong, Pfefferminze, Kamille, Lindenblüten, Salbei, Fenchel, Früchte wie Orange, Apfel, Birne, Limette, Maracuja, Heidelbeere, Banane oder Granatapfel, Ingwer oder Rotbuschtee und Teesortengemische eingesetzt werden. Diese können mit Substanzen beziehungsweise Ergänzungsmitteln wie Ginko, Ingwer, Heilkräuter, Vitamine und Spurenelemente sowie insbesondere mit Blättern der Stevia-Pflanze beispielsweise als Süssstoff gemischt sein.

Die Ausgestaltung der Kartuschenbrüheinheit und der Kartuschenhalterung der erfindungsgemässen Getränkezubereitungsvorrichtung erlaubt, dass die Getränkekartusche über einen bestimmten vordefinierbaren Zeitraum hinweg in einer in den Ziehbehälter eingefüllte Flüssigkeit ziehen kann. Dies lässt eine bevorzugte und insbesondere im Vergleich zu einem reinen Durchlauf beziehungsweise Durchspülen verbesserte Aromatisierung der Flüssigkeit zu. Insbesondere bei der Verwendung von Teesorten beziehungsweise -gemischen ermöglicht dies eine Verbesserung der Qualität des zubereiteten Getränks. Dabei ermöglicht die Rühreinrichtung, dass die Getränkekartusche laufend von der Flüssigkeit umspült wird, was eine effiziente und effektive Aromatisierung der Flüssigkeit und eine effiziente Zubereitung von heissen und kalten Getränken ermöglicht. Parallel dazu kann die Getränkekartusche analog zur herkömmlichen Verarbeitung auch von der Flüssigkeit durchlaufen beziehungsweise durchspült werden, was je nach Aromastoffe zweckmässig sein kann. Durch diese in der Getränkezubereitungsvorrichtung kombiniert möglichen Getränkezubereitungsarten kann die Getränkezubereitung flexibel auf die Getränkekartusche angepasst und optimiert sein.

Die Getränkezubereitungsvorrichtung kann eine Zulaufleitung umfassen, die mit dem Ziehbehälter der Kartuschenbrüheinheit verbunden ist. Auf diese Weise kann der Ziehbehälter mit einer durch die Zulaufleitung geführten Flüssigkeit befüllt werden, wobei die Flüssigkeit insbesondere reines oder bereits vorbereitetes Wasser sein kann.

Dabei kann die Getränkezubereitungsvorrichtung weiter einen Flüssigkeitstank und eine Förderpumpe aufweisen, wobei die Zulaufleitung mit dem Flüssigkeitstank verbunden ist und die Förderpumpe zum Fördern von Flüssigkeit aus dem Flüssigkeitstank in den Ziehbehälter der Kartuschenbrüheinheit ausgestaltet ist. Auf diese Weise kann die Flüssigkeit beziehungsweise das Wasser in erprobter Weise in der Getränkezubereitungsvorrichtung geiagert und bei Bedarf verarbeitet werden. Der Flüssigkeitstank kann aus der Getränkezubereitungsvorrichtung entnehmbar sein, so dass er auf einfache Weise beispielsweise manuell gefüllt werden kann.

Auch kann die Getränkezubereitungsvorrichtung ein Heizelement zur Heizung der Flüssigkeit umfassen. Dabei kann das Heizelement so in Verbindung mit der Zulaufleitung ausgestaltet sein, dass die Flüssigkeit beim Durchströmen der Zulaufleitung geheizt wird. Oder das Heizelement kann auch zum Heizen der Flüssigkeit in der Kartuschenbrüheinheit und insbesondere in beziehungsweise an seinem Ziehbehälter vorgesehen sein.

Die Getränkezubereitungsvorrichtung kann eine in einen Ausguss mündende Ausgussleitung umfassen, die mit dem Ziehbehälter der Kartuschenbrüheinheit verbunden ist. Dadurch kann die Flüssigkeit nach dem Ziehen im Ziehbehälter aus dem Ziehbehälter abgeführt und ausgegossen werden. Benachbart zu einer Mündung der Ausgussleitung kann die Getränkezubereitungsvorrichtung eine Trinkgefässaufnahme aufweisen. Im Betrieb kann die Trinkgefässaufnahme beispielsweise auf einem dazu vorgesehenen Standplatz ein Trinkgefäss wie beispielsweise eine Tasse oder ein Glas aufnehmen und das Trinkgefäss kann mit dem aus des der Mündung der Ausgussleitung strömenden Getränk befüllt werden. Die Trinkgefässaufnahme kann eine beispielsweise unter dem Standplatz angeordnete Tropfschale aufweisen, in der beispielsweise aus der Ausgussleitung tropfende Flüssigkeit oder Spülflüssigkeit gesammelt werden kann.

In der Getränkezubereitungsvorrichtung umfasst die Rühreinrichtung vorzugsweise ein Drehlager und einen Drehantrieb, wobei der Ziehbehälter der Kartuschenbrüheinheit auf dem Drehlager drehbar gelagert ist und der Ziehbehälter mittels des Drehantriebs drehbar ist. Indem der Drehantrieb den Ziehbehälter beispielsweise in einer Hin- und Herbewegung dreht, kann die Strömung im Innenraum des Ziehbehälters und insbesondere in seinem Kartuschenbereich auf effiziente Weise erzeugt werden. Das Drehlager kann Rollen oder Kugeln umfassen, auf denen der Ziehbehälter liegt. Der Drehantrieb kann einen Motor und ein Antriebsrad umfassen, wobei der Motor das Antriebsrad vorzugsweise in beide Richtungen drehen kann und wobei das Antriebsrad, so auf den Ziehbehälter wirkt, dass dieser über Reibkräfte zwischen dem Antriebsrad und einer Aussenseite des Ziehbehälters gedreht wird. Eine solche Ausgestaltung des Drehantriebs und des Drehlagers ermöglicht eine verhältnismässig einfache effiziente Konstruktion.

Vorzugsweise umfasst die Rühreinrichtung einen im Ziehbehälter angeordneten Rührer und einen Rührerantrieb zum Antreiben des Rührers. Der Rührer kann beispielsweise ein Propellerrührer, ein Schrägblattrührer, ein Scheibenrührer, ein Impellerrührer, ein Kreuzbalkenrührer, ein Ankerrührer, ein Blattrührer, ein Gitterrührer oder ein Wendelrührer sein. Insbesondere kann der Rührer nahe eines Bodens des Ziehbehälters angeordnet sein. Der Rührerantrieb kann einen Motor wie beispielsweise einen Elektromotor und eine Achse umfassen, wobei der Rührer drehfest auf der Achse montiert ist. Ein solcher Rührer ermöglicht eine effiziente Erzeugung der Strömung im Kartuschenbereich des Ziehbehälters.

Dabei umfasst die Rühreinrichtung vorzugsweise einen Strömungsbrecher, der an einer Innenseite eines Randes des Ziehbehälters der Kartuschenbrüheinheit angeordnet ist. Die Getränkezubereitungsvorrichtung kann insbesondere mehrere solche Strömungsbrecher aufweisen. Der Strömungsbrecher kann beispielsweise als Paddel oder Lamelle ausgestaltet sein. Mittels eines solchen Strömungsbrechers kann eine Gleichförmigkeit der Strömung reduziert oder verhindert werden beziehungsweise es kann eine turbulente Strömung erzeugt werden. Dies ermöglicht, dass die Getränkekartusche ungleichmässig umspült wird, was im Gegenzug die Gleichmässigkeit und die Effizienz der Aromatisierung der gesamten Flüssigkeit im Ziehbehälter steigern kann.

Vorzugsweise umfassen die Haltemittel der Kartuschenhalterung ein Gitter, auf dem die Getränkekartusche anordbar ist. Ein solches Gitter ermöglicht, dass die Getränkekartusche auf den Haltemitteln sicher liegt und von diesen getragen und gestützt wird. Gleichzeitig kann ein solches Gitter von der Flüssigkeit durchdrungen werden, was ermöglicht, dass eine darauf angeordnete Getränkekartusche vollständig umspült werden kann.

Auch umfassen die Haltemittel der Kartuschenhalterung vorzugsweise einen Klemmrahmen. Der Klemmrahmen ermöglicht, dass ein Randbereich der Getränkekartusche eingeklemmt und die Getränkekartusche somit an der Kartuschenhalterung fixiert wird. Falls die Haltemittel wie vorstehend ausgeführt auch ein Gitter aufweisen, kann sich der Klemmrahmen insbesondere um das Gitter herum erstrecken. Die Getränkekartusche kann damit mit einem Körperabschnitt auf dem Gitter angeordnet werden und mit einem Randabschnitt vom Klemmrahmen geklemmt. Solche Haltemittel ermöglichen ein verhältnismässig einfaches Handling der Getränkekartusche, wobei gewährleistet werden kann, dass die Getränkekartusche während eines Brühvorgangs bestimmungsgemäss und sicher im Kartuschenbereich des Ziehbehälters der Kartuschenbrüheinheit platziert ist und umspült werden kann.

Vorzugsweise umfasst die Getränkezubereitungsvorrichtung eine Tablettenbrüheinheit mit einem Auflösebehälter und einer im Innern des Auflösebehälters ausgestalteten Tablettenaufnahme, wobei der Auflösebehälter mit der Flüssigkeit befüllbar ist. Eine solche Ausgestaltung der Getränkezubereitungsvorrichtung ermöglicht, dass vor oder nach dem Befüllen der Kartuschenbrüheinheit oder auch unabhängig davon eine Tablette in der Flüssigkeit aufgelöst werden kann. Damit kann die Aromatisierung beziehungsweise Flüssigkeitsaufbereitung mittels der Getränkekartusche mit der Flüssigkeitsaufbereitung mittels der Tablette kombiniert werden. Auf diese Weise ergeben sich zusätzliche Möglichkeiten der Getränkezubereitung insbesondere mit Hilfe von Stoffen und Substanzen, die bevorzugt entweder in einer Kartusche oder in einer löslichen Form als Tablette zubereitet werden.

Die Tablette kann beispielsweise im Wesentlichen kreisscheibenförmig oder kreissegmentscheibenförmig ausgestaltet sein. Die Tablette kann für verschiedene Anwendungen vorgesehene Substanzen beziehungsweise Wirkstoffe beinhalten. Beispielsweise kann sie Aromazusatzstoffe, Süssstoffe wie insbesondere Stevia-Extrakte, eigenständige Getränke, Vitamine, Spurenelemente, Naturheilprodukte, pharmazeutische Wirkstoffe oder Ähnliches umfassen.

Die Tablettenbrüheinheit kann der Kartuschenbrüheinheit vorgeschaltet sein. Insbesondere kann die Zulaufleitung beispielsweise vom Flüssigkeitstank ausgehend über die Tablettenbrüheinheit mit der Kartuschenbrüheinheit verbunden sein. Auf diese Weise kann die Flüssigkeit zuerst in die Tablettenbrüheinheit geführt werden und dessen Auflösebehälter befüllen beziehungsweise durchströmen. Nach dem Auflösen der Tablette in der Tablettenbrüheinheit kann die Flüssigkeit dann in den Ziehbehälter der Kartuschenbrüheinheit gefördert werden.

Die Getränkezubereitungsvorrichtung kann eine erste Bypassleitung umfassen, die die Zulaufleitung vor der Tablettenbrüheinheit direkt mit der Zulaufleitung nach der Tablettenbrüheinheit verbindet, wobei ein erstes Absperrventil zwischen der ersten Bypassleitung und der Tablettenbrüheinheit an der Zulaufleitung und ein zweites Absperrventil an der ersten Bypassleitung angeordnet sind. Ein so ausgestaltetes Leitungssystem ermöglicht, dass über eine geeignete Auswahl der Stellungen der beiden Absperrventile die Flüssigkeit direkt oder über die Tablettenbrüheinheit der Kartuschenbrüheinheit zugeführt wird. Dadurch kann selektiv eingestellt werden, ob die Tablettenbrüheinheit bei der Getränkezubereitung zu- oder weggeschaltet sein soll.

Weiter kann die Getränkezubereitungsvorrichtung eine zweite Bypassleitung umfassen, die die Zulaufleitung nach der Tablettenbrüheinheit direkt mit der Ausgussleitung verbindet, wobei ein drittes Absperrventil zwischen der Tablettenbrüheinheit und der Kartuschenbrüheinheit an der Zulaufleitung und ein viertes Absperrventil an der zweiten Bypassleitung angeordnet sind. Die erste Bypassleitung kann mit der zweiten Bypassleitung verbunden sein. Ein so zusätzlich angepasstes Leitungssystem ermöglicht, dass über eine geeignete Auswahl der Stellungen der vier Absperrventile die Flüssigkeit über die Tablettenbrüheinheit, über die Kartuschenbrüheinheit, über beide Brüheinheiten oder direkt ohne die beiden Brüheinheiten der Ausgussleitung zugeführt wird. Dadurch kann selektiv eingestellt werden, ob die Tablettenbrüheinheit und/oder die Kartuschenbrüheinheit bei der Getränkezubereitung zu- oder weggeschaltet sein soll, was eine flexible vielseitige Getränkezubereitung ermöglicht.

Die Getränkezubereitungsvorrichtung umfasst vorzugsweise eine Tablettenhalterung mit Haltemitteln, wobei eine Tablette so durch die Haltemittel der Tablettenhalterung haltbar ist, dass die Tablette in der Tablettenaufnahme angeordnet ist. Eine solche Tablettenhalterung ermöglicht, dass die Tablette auf einfache Weise genau in der Tablettenbrüheinheit positioniert ist, dass sie effizient aufgelöst werden kann. Zudem ermöglicht eine solche Tablettenhalterung ein komfortables benutzerfreundliches Handling der Tablette. Dabei umfassen die Haltemittel der Tablettenhalterung vorzugsweise ein Sieb und einen Rand, wobei der Rand den Umfang des Siebs zumindest teilweise abschliesst und korrespondierend zur Tablette geformt ist. Im Betrieb kann die Tablette in den Rand der Haltemittel der Tablettenhalterung eingelegt werden und liegt somit auf dem Sieb auf. Dabei wird die Tablette vom Sieb getragen und vom Rand seitlich gestützt, so dass die Tablette fest und exakt auf der Tablettenhalterung positioniert sein kann. Die Tablettenhalterung kann zusammen mit der Kartuschenhalterung in einer Einheit ausgeführt sein.

Vorzugsweise umfasst die Getränkezubereitungsvorrichtung eine Steuereinheit und einen Kartuschencodeleser, wobei der Kartuschencodeleser so ausgestaltet ist, dass ein auf einer im Kartuschenbereich des Ziehbehälters angeordneten Getränkekartusche angebrachter Code mittels des Kartuschencodelesers lesbar und an die Steuereinheit übertragbar ist. Mittels eines solchen Kartuschencodelesers und einer Steuereinheit können über den Code Rückschlüsse auf den Inhalt der Getränkekartusche gezogen werden. Dies ermöglicht, dass die Steuereinheit die Bedingungen in der Kartuschenbrüheinheit auf die Inhaltsstoffe der Getränkekartusche angepasst einstellt und somit eine optimierte Getränkezubereitung ermöglicht. Beispielsweise können auf diese Weise die Flüssigkeitstemperatur, die Ziehzeit und/oder die Stärke der Strömung im Ziehbehälter auf die Inhaltsstoffe der Kartusche angepasst werden.

Vorzugsweise umfasst die Getränkezubereitungsvorrichtung eine Steuereinheit und einen Tablettencodeleser, wobei der Tablettencodeleser so ausgestaltet ist, dass ein auf einer in der Tablettenaufnahme des Lösebehälters angeordnete Tablette angebrachter Code mittels des Tablettencodelesers lesbar und an die Steuereinheit übertragbar ist. Mittels eines solchen Tablettencodelesers und Steuereinheit können über den Code Rückschlüsse auf den Inhalt der Tablette gezogen werden. Dies ermöglicht, dass die Steuereinheit die Bedingungen in der Tablettenbrüheinheit auf die Inhaltsstoffe der Tablette angepasst einstellt und somit eine optimierte Getränkezubereitung ermöglicht. Beispielsweise können auf diese Weise die Flüssigkeitstemperatur, die Lösezeit und/oder die Stärke der Strömung im Lösebehälter auf die Inhaltsstoffe der Tablette angepasst werden.

Der Kartuschencodeleser und/oder der Tablettencodeleser können als optische Leseeinheit beziehungsweise Scanner ausgestaltet sein. Die auf den Tabletten beziehungsweise auf den Kartuschen angerbachten Codes können beispielsweise Barcodes, Punktcodes, Farbcodes, Zahlencodes oder sogenannte Quick Response Codes (QR-Codes).

Die Steuereinheit ist dabei vorzugsweise dazu ausgestaltet, den auf der Kartusche angebrachten Code mit dem auf der Tablette angebrachten Code zu vergleichen. Eine so ausgestaltete Steuereinheit kann über den Vergleich der Codes eine Verträglichkeit der eingelegten Kartusche mit der eingelegten Tablette auswerten. So kann sie beispielsweise eine unpassende Kartuschen-Tabletten-Kombination abweisen und eine Getränkezubereitung nur erlauben, falls eine passende Kartuschen-Tabletten-Kombination eingelegt ist. Damit kann beispielsweise verhindert werden, dass ein ungeniessbares Getränk zubereitet wird oder dass unverträgliche Komponenten beziehungsweise Substanzen gemischt werden.

Ein weiterer Aspekt der vorliegenden bezieht sich auf ein Getränkekartusche für eine wie oben beschriebene Getränkezubereitungsvorrichtung, die eine auf die Haltemittel der Kartuschenhalterung der Getränkezubereitungsvorrichtung angepasste äussere Form aufweist, so dass die Getränkekartusche in einer vordefinierten Ausrichtung an einer vordefinierten Position in der Kartuschenhalterung anordbar ist. Die Getränkekartusche kann wie oben beschrieben ausgestaltet, hergestellt und beladen beziehungsweise gefüllt sein. Insbesondere kann eine solche Getränkekartusche ausschliesslich in der vordefinierten Ausrichtung an der vordefinierten Position in der Kartuschenhalterung anordbar sein. Auf diese Weise kann erreicht werden, dass die Getränkekartusche beim Brühen in der Getränkezubereitungsvorrichtung exakt im Ziehbehälter der Kartuschenbrüheinheit positioniert ist und somit effizient gebrüht werden kann. Beispielsweise kann die Getränkekartusche grösstenteils rund und kissenförmig ausgestaltet sein, wobei eine Seite gerade beziehungsweise eben geformt ist. Die Haltemittel der Kartuschenhalterung kann korrespondierend ausgestaltet sein, so dass die Getränkekartusche in einer einzigen Position und Ausrichtung in der Kartuschenhalterung angeordnet sein kann.

Vorzugsweise weist die Getränkekartusche einen von aussen lesbaren Code auf. Indem die Getränkekartusche exakt in der vordefinierten Ausrichtung und an der vordefinierten Position in der Kartuschenhalterung und somit im Ziehbehälter der Kartuschenbrüheinheit angeordnet ist, kann der Code auf einfache schnelle Weise abgelesen werden. Ein Nachjustieren eines Codelesers und/oder der Getränkekartusche zu diesem Zweck ist nicht notwendig.

Vorzugsweise umfasst die Getränkekartusche eine abgeschlossene äussere Kammer mit einem ersten Inhalt und eine abgeschlossene innere Kammer, wobei die innere Kammer vollständig innerhalb der äusseren Kammer liegt. Dabei können beide Kammern jeweils durch eine flüssigkeitsdurchlässige Hülle gebildet sein. Eine solche Ausgestaltung der Getränkekartusche mit zwei Kammern, ermöglicht, dass sich in einer einzigen Getränkekartusche Inhalte befinden, die nicht vor dem Brühen beziehungsweise Zubereiten gemischt werden sollten. Beispielsweise soll dies in gewissen Fällen verhindert werden, damit die verschiedenen Inhalte nicht miteinander interagieren und sich gegenseitig beeinträchtigen. Eine solche Getränkekartusche mit einer inneren und einer äusseren Kammer kann auch ohne auf die Haltemittel der Kartuschenhalterung der Getränkezubereitungsvorrichtung angepasste äussere Form zweckmässig sein. Insbesondere kann eine solche Getränkekartusche auch in anderen Getränkezubereitungsvorrichtungen beispielsweise in herkömmlichen Getränkezubereitungsvorrichtungen zweckmässig und vorteilhaft sein.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere werden im Folgenden die erfindungsgemässe Getränkezubereitungsvorrichtung und die erfindungsgemässe Getränkekartusche unter Bezugnahme auf die beigefügten Zeichnungen anhand von Ausführungsbeispielen detaillierter beschrieben. Es zeigen:
- Fig. 1: eine schematische Ansicht eines ersten Ausführungsbeispiels einer erfindungsgemässen Getränkezubereitungsvorrichtung und eines ersten Ausführungsbeispiels einer erfindungsgemässen Getränkekartusche;
- Fig. 2: eine perspektivische Ansicht einer Kartuschenbrüheinheit eines zweiten Ausführungsbeispiels einer erfindungsgemässen Getränkezubereitungsvorrichtung;
- Fig. 3: eine perspektivische Ansicht einer Kartuschenbrüheinheit eines dritten Ausführungsbeispiels einer erfindungsgemässen Getränkezubereitungsvorrichtung;
- Fig. 4: eine perspektivische Ansicht einer Kartuschenhalterung eines vierten Ausführungsbeispiels einer erfindungsgemässen Getränkezubereitungsvorrichtung in einer geöffneten Stellung;
- Fig. 5: eine perspektivische Ansicht der Kartuschenhalterung von Fig. 4 in einer geschlossenen Stellung;
- Fig. 6: eine Seitenansicht einer Getränkekartusche für die Kartuschenhalterung von Fig. 4;
- Fig. 7: eine perspektivische Ansicht einer Tablette und einer zugehörigen Tablettenhalterung eines fünften Ausführungsbeispiels einer erfindungsgemässen Getränkezubereitungsvorrichtung;
- Fig. 8: eine perspektivische Ansicht einer Tablette und einer zugehörigen Tablettenhalterung eines sechsten Ausführungsbeispiels einer erfindungsgemässen Getränkezubereitungsvorrichtung; und
- Fig. 9: eine perspektivische Ansicht einer Tablette und einer zugehörigen Tablettenhalterung eines siebten Ausführungsbeispiels einer erfindungsgemässen Getränkezubereitungsvorrichtung.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt der dargestellten Gegenstände sowie benannter Teile derselben. Die Terminologie umfasst die oben ausdrücklich erwähnten Wörter, Ableitungen von denselben und Wörter ähnlicher Bedeutung.

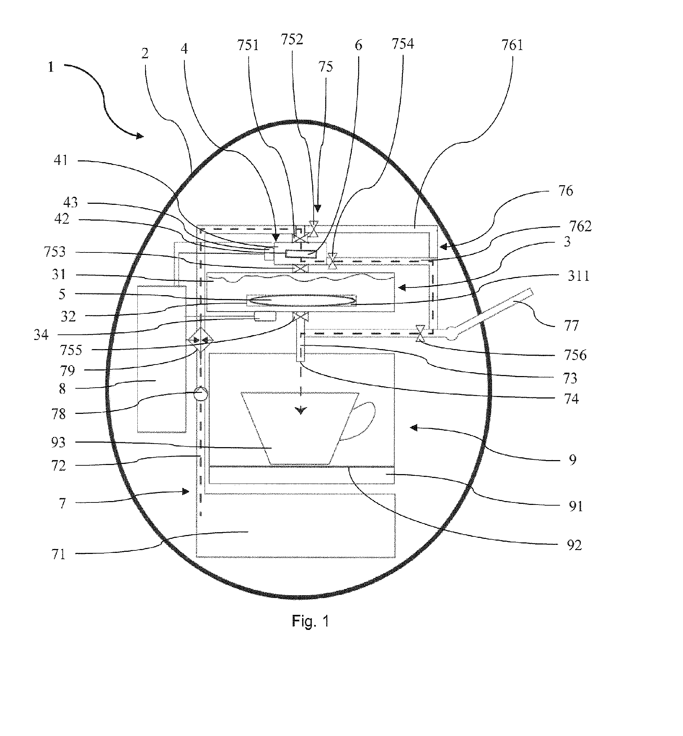

Fig. 1 zeigt den schematischen Aufbau eines ersten Ausführungsbeispiels einer erfindungsgemässen Getränkezubereitungsvorrichtung 1. Die Getränkezubereitungsvorrichtung umfasst ein robustes Gehäuse 2, das aus einem geeigneten Material wie beispielsweise einem Kunststoff oder einem Metall hergestellt ist. Im Innern des Gehäuses 2 ist ein Wasserverarbeitungssystem 7 mit einem Wassertank 71, einer Zulaufleitung 72, einer in einen Ausguss 74 mündenden Ausgussleitung 73 und mehreren Absperrventilen 75 angeordnet. Um eine möglichst hohe Standstabilität zu erreichen, ist der Wassertank 71 unten im Gehäuse 2 angeordnet.

Vom Wassertank 71 führt die Zulaufleitung 72 nach oben und mündet von oben durch ein erstes Absperrventil 751 der mehreren Absperrventile 75 in eine Tablettenbrüheinheit 4. Die Zulaufleitung 72 ist mit einer Pumpe 78 verbunden, mit welcher Wasser beziehungsweise eine Flüssigkeit durch die Zulaufleitung 72 und durch das System gefördert werden kann. Die Zulaufleitung 72 ist auch mit einem Heizelement 79 verbunden, über welches das geförderte Wasser erwärmt werden kann.

Die Tablettenbrüheinheit 4 umfasst einen Auflösebehälter 41, in dem eine Tablettenhalterung 42 zur Aufnahme und zum Halten einer Tablette 6 angeordnet ist. Die Tablettenbrüheinheit 4 weist an seinem Boden einen Auslass auf, der durch ein drittes Absperrventil 753 der mehreren Absperrventile 75 in eine Kartuschenbrüheinheit 3 mündet. Die Kartuschenbrüheinheit 3 umfasst eine Rühreinrichtung und einen Ziehbehälter 31, der in seinem Innern einen Kartuschenbereich 311 aufweist, in dem Haltemittel einer Kartuschenhalterung 32 angeordnet sind. Die Haltemittel der Kartuschenhalterung 32 sind zur Aufnahme und zum Halten einer Getränkekartusche 5 ausgebildet.

An seinem Boden ist der Ziehbehälter 31 der Kartuschenbrüheinheit 3 durch ein fünftes Absperrventil 755 der mehreren Absperrventile 75 mit der Ausgussleitung 73 verbunden, die sich nach unten in den Ausguss 74 erstreckt. Unterhalb des Ausgusses 74 ist eine Trinkgefässaufnahme 9 ausgebildet, die einen Standplatz 92 und eine Tropfschale 91 aufweist. Der Standplatz 92 ist dazu ausgestaltet ein Trinkgefäss wie beispielsweise eine Tasse 93 so zu tragen, dass sie mit aus dem Ausguss 74 strömender Flüssigkeit beziehungsweise zubereitetem Getränk befüllt werden kann.

Zur selektiven Zu- und Wegschaltung der Tablettenbrüheinheit 4 beziehungsweise Kartuschenbrüheinheit 3 umfasst die Getränkezubereitungsvorrichtung 1 mehrere Bypassleitungen 76. Eine erste Bypassleitung 761 verbindet die Zulaufleitung 72 vor dem ersten Absperrventil 751 direkt mit der Ausgussleitung 73, wobei ein zweites Absperrventil 752 nahe der Mündung in die Zulaufleitung 72 an der ersten Bypassleitung 761 angeordnet ist. Eine zweite Bypassleitung 762 verbindet die Tablettenbrüheinheit 4 direkt mit der Ausgussleitung 73, wobei ein viertes Absperrventil 754 nahe der Mündung in die Tablettenbrüheinheit 4 an der zweiten Bypassleitung 762 angeordnet ist. Die erste Bypassleitung 761 und die zweite Bypassleitung 762 sind miteinander verbunden. Unterhalb der Verbindung zwischen erster Bypassleitung 761 und zweiter Bypassleitung 762 ist ein Ausfüllhahn 77 gelenkig mit den Bypassleitungen 761, 762 verbunden, wobei ein sechstes Absperrventil 756 nahe der Mündung der Bypassleitungen 761, 762 und des Ausfüllhahns 77 angeordnet ist.

Die Getränkezubereitungsvorrichtung 1 weist eine Steuereinheit 8 mit einem Rechner und einem Speicher auf. Unter anderem steuert die Steuereinheit die mehreren Absperrventile 75, um den Strömungsverlauf des Wassers in der Getränkezubereitungsvorrichtung 1 festzulegen. Beispielsweise sind in der in Fig. 1 gezeigten Stellung das erste Absperrventil 751, das vierte Absperrventil 754 und das sechste Absperrventil 756 über die Steuereinheit 8 geöffnet und das zweite Absperrventil 752 und das dritte Absperrventil 753 über die Steuereinheit 8 geschlossen, so dass das Wasser wie durch die gestrichelte Linie angedeutet mittels der Pumpe 78 vom Wassertank 71 durch die Zulaufleitung 72, die Tablettenbrüheinheit 4, die zweite Bypassleitung 762 und die Ausgussleitung 73 gefördert wird. Die Getränkezubereitungsvorrichtung 1 befindet sich also in einer Stellung, in der ein Getränk über ein Auflösen einer Tablette 6 in der Tablettenbrüheinheit 4 zubereitet wird, ohne dass die Kartuschenbrüheinheit 3 eingesetzt wird. Die Kartuschenbrüheinheit 3 ist dabei also weggeschaltet.

An der Tablettenbrüheinheit 4 ist ein Tablettencodeleser 43 und an der Kartuschenbrüheinheit 3 ein Kartuschencodeleser 34 angebracht. Der Tablettencodeleser 43 umfasst ein optisches Lesegerät, das einen auf der Tablette 6 angebrachten Code in der Tablettenhalterung 42 im Innern der Tablettenbrüheinheit 4 lesen kann. Analog umfasst der Kartuschencodeleser 34 ein optisches Lesegerät, das einen auf der Getränkekartusche 5 angebrachten Code in der Kartuschenhalterung 32 im Innern der Kartuschenbrüheinheit 3 lesen kann. Der Tablettencodeleser 43 und der Kartuschencodeleser 34 sind jeweils mit der Steuereinheit 8 verbunden, so dass die gelesenen Codes auf die Steuereinheit 8 übertragen und von dieser ausgewertet werden können.

Im Betrieb der Getränkezubereitungsvorrichtung 1 wird beispielsweise eine codierte Tablette 6 in der Tablettenhalterung 42 eingelegt und in die Tablettenbrüheinheit 4 eingeschoben. Ebenfalls wird eine Getränkekartusche 5 in die Kartuschenhalterung 32 eingelegt und in die Kartuschenbrüheinheit 3 eingeschoben. Über eine Bedienkonsole wird der Getränkezubereitungsvorgang gestartet, wobei der Tablettencodeleser 43 und der Kartuschencodeleser 34 jeweils den Code der eingelegten Tablette 6 beziehungsweise Getränkekartusche 5 liest und an die Steuereinheit 8 überträgt. Die Steuereinheit 8 wertet die übertragenen Codes aus und prüft in einem ersten Schritt, ob die eingelegte Tablette 6 und die eingelegte Getränkekartusche 5 miteinander verträglich sind beziehungsweise geschmacklich miteinander harmonieren. Nach Feststellen der Verträglichkeit stellt sie die Verarbeitungs- beziehungsweise Zubereitungsbedingungen wie beispielsweise Druck, Temperatur, Fliessgeschwindigkeit, Rührgeschwindigkeit, Ziehzeit etc. in der Tablettenbrüheinheit 4 abgestimmt auf die Tablette 6 und in der Kartuschenbrüheinheit 3 abgestimmt auf die Getränkekartusche 5 ein. Zudem stellt sie die mehreren Absperrventile 75 so ein, dass das Wasser entsprechend der vom Benutzer gewählten Betriebsart gefördert werden kann.

Das Wasser wird dann mittels der Pumpe 78 aus dem Wassertank 71 durch die Zulaufleitung 72 in die Tablettenbrüheinheit 4 gefördert, wobei es dabei vom Heizelement 79 erwärmt wird. In der Tablettenbrüheinheit 4 durchfliesst das Wasser den Auflösebehälter 41 und wird in die Kartuschenbrüheinheit 3 gefördert, wo es bei geschlossenem viertem Absperrventil gesammelt wird und den Ziehbehälter 31 befüllt. Nach dem Befüllen des Ziehbehälters 31 schliesst die Steuereinheit 8 auch das dritte Absperrventil 753. Die Rühreinrichtung der Kartuschenbrüheinheit 3 sorgt dafür, dass der Kartuschenbereich 311 des Ziehbehälters 31 und somit die in der Kartuschenhalterung 32 angeordnete Getränkekartusche 5 laufend umspült wird. Die in der Getränkekartusche 5 angeordneten Aromastoffe wie beispielsweise Tee und anderen Substanzen können dabei effizient ziehen und das Wasser so aromatisieren beziehungsweise anreichern. Nach einer bestimmten Ziehzeit öffnet die Steuereinheit 8 das dritte Absperrventil 753 und das fünfte Absperrventil 755, so dass das zubereitete Getränk mittels der Pumpe 78 in die Ausgussleitung 73 und aus dem Ausguss 74 gefördert wird.

Nach der Getränkezubereitung kann die Kartuschenhalterung 32 einfach aus der Getränkezubereitungsvorrichtung 1 entnommen werden. Die benutzte Getränkekartusche 5 kann dann entfernt und beispielsweise kompostiert werden. Die Getränkezubreitungsvorrichtung 1 kann dann vor einer weiteren Anwendung gespült und dadurch gereinigt werden. Die Kartuschenbrüheinheit 3 sowie auch die Tablettenbrüheinheit 4 können als ganzen aus der Getränkezubereitungsvorrichtung 1 entnommen und beispielsweise von Zeit zu Zeit in einer Geschirrspülmaschine gereinigt werden.

Über die mittels der Steuereinheit 8 angepasste Einstellung der Verarbeitungsbedingungen und über die mittels der Steuereinheit 8 angepasste Wasserförderung können mit der Getränkezubereitungsvorrichtung 1 verschiedene Kombinationen von Tabletten und Getränkekartuschen aufeinander abgestimmt und optimiert verarbeitet werden. Beispielsweise können ausschliesslich mit einer Tablette, ausschliesslich mit einer Getränkekartusche oder kombinierte Getränke zubereitet werden. Auch ermöglichen die mehreren Bypassleitungen 76, dass während ein Getränk in der Kartuschenbrüheinheit zubereitet wird, also insbesondere während der Ziehzeit, parallel ein weiteres Getränk in der Tablettenbrüheinheit zubereitet oder Warmwasser ausgegeben wird.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

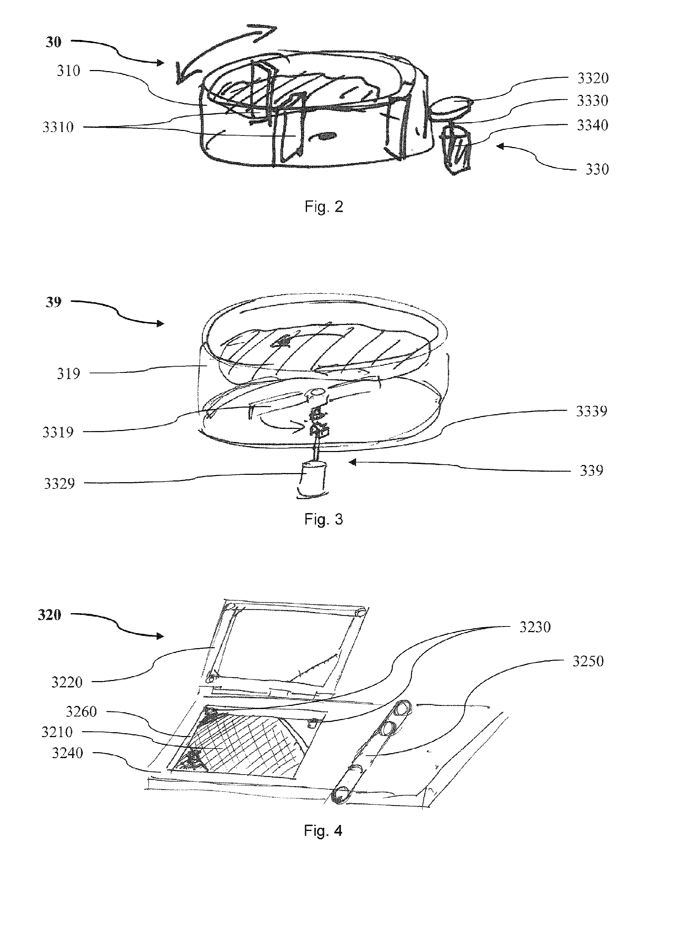

Fig. 2 zeigt eine Kartuschenbrüheinheit 30 eines zweiten Ausführungsbeispiels einer Getränkezubereitungsvorrichtung, wobei der Rest der Getränkezubereitungsvorrichtung analog zu der oben beschriebenen Getränkezubereitungsvorrichtung 1 ausgestaltet sein kann. Die Kartuschenbrüheinheit 30 umfasst einen Ziehbehälter 310 und eine Rühreinrichtung 330. An einer Innenseite eines Randes des Ziehbehälters 310 sind drei Paddel 3310 der Rühreinrichtung 330 regelmässig am Umfang de Randinnenseite des Ziehbehälters 310 angeordnet. Die Rühreinrichtung 330 umfasst einen Drehantrieb mit einem Elektromotor 3340, einer durch den Elektromotor 3340 drehbare Welle 3330 beziehungsweise Achse und ein drehfest mit der Welle 3330 verbundenes Antriebsrad 3320.

Der Ziehbehälter 310 ist über Kugeln oder Rollen drehbar in der Getränkezubereitungsvorrichtung montiert. Das Antriebsrad 3320 liegt so an der Aussenseite des Randes des Ziehbehälters 310 an, dass ein Drehen des Antriebsrades 3320 eine Drehung des Ziehbehälters 310 induziert. Indem der Elektromotor 3340 das Antriebsrad 3320 alternierend in die eine Drehrichtung und in die andere Drehrichtung dreht, wird der Ziehbehälter 310 hin- und hergedreht. Dadurch wird eine Strömung im Innern des befüllten Ziehbehälters 310 und insbesondere in seinem Kartuschenbereich induziert. Diese Strömung wird durch die Paddel 3310 noch verstärkt, so dass eine zweckmässige Turbulenz auf effiziente Weise im Innern des Ziehbehälters 310 erzeugt werden kann.

In Fig. 3 ist eine Kartuschenbrüheinheit 39 eines dritten Ausführungsbeispiels einer Getränkezubereitungsvorrichtung gezeigt, wobei der Rest der Getränkezubereitungsvorrichtung analog zu der oben beschriebenen Getränkezubereitungsvorrichtung 1 ausgestaltet sein kann. Die Kartuschenbrüheinheit 39 umfasst einen Ziehbehälter 319 und eine Rühreinrichtung 339. In der Nähe eines Bodens des Ziehbehälters 319 ist ein Rührer 3319 in der Form eines Propellers drehfest auf einer Welle 3339 beziehungsweise Achse eines Rührerantriebs der Rühreinrichtung 339 montiert. Der Rührerantrieb umfasst weiter einen Elektromotor 3329 zum Drehen der Welle 3339 und somit zum Rotieren des Rührers 3319. Indem der Elektromotor 3329 die Welle 3339 und damit den Rührer 3319 in eine Drehrichtung dreht, wird eine Strömung im Innern des befüllten Ziehbehälters 319 und insbesondere in seinem Kartuschenbereich induziert.

Fig. 4 zeigt eine Kartuschenhalterung 320 eines vierten Ausführungsbeispiels einer Getränkezubereitungsvorrichtung, wobei der Rest der Getränkezubereitungsvorrichtung analog wie oben beschrieben ausgestaltet sein kann. Die Kartuschenhalterung 320 weist einen Körperabschnitt 3240 auf, der um ein Gelenk 3250 geknickt beziehungsweise gebogen werden kann. Sie umfasst weiter eine rechteckige Kartuschenaufnahme 3260 mit einem Boden, der drei seiner vier Ecken durgehend und im Übrigen als Gitter 3210 ausgestaltet ist. Die Ecken sind mit Befestigungszapfen 3230 versehen. Über ein Klappgelenk mit dem Körperabschnitt 3240 verbunden weist die Kartuschenhalterung 320 einen Klemmrahmen 3220 auf mit dem ein Randbereich der Kartuschenaufnahme 3260 und insbesondere die Ecken ihres Bodens abgedeckt werden kann.

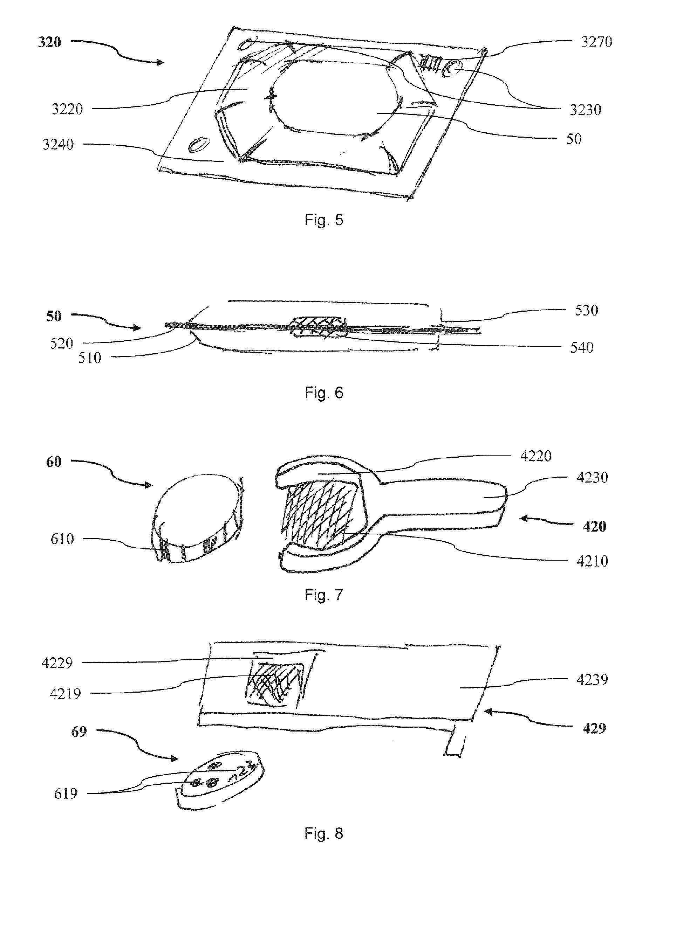

Wie in Fig. 5 gezeigt wird in Anwendung der Kartuschenhalterung 320 eine geeignete Getränkekartusche 50 in die Kartuschenaufnahme 3260 eingelegt und der Klemmrahmen 3220 wird geschlossen. Dabei wird ein Randbereich der Getränkekartusche 50 vom Klemmrahmen 3220 in der Kartuschenaufnahme 3260 geklemmt, wobei der Randbereich der Getränkekartusche 50 insbesondere an den Befestigungszapfen 3230 befestigt wird. An einem der Ecken des Klemmrahmens 3220 ist ein Fenster 3270 ausgestaltet, durch welches ein auf der Getränkekartusche 50 angebrachter Code bei geschlossenem Klemmrahmen 3220 sichtbar ist. Das Gitter 3210, der Klemmrahmen 3220, die Befestigungszapfen 3230 und die Kartuschenaufnahme bilden zusammen Haltemittel der Kartuschenhalterung 320.

In Fig. 6 ist die Getränkekartusche 50 von der Seite her gezeigt, wobei ersichtlich ist, dass sie eine äussere Hülle 510 aufweist, die aus zwei an ihren Randbereichen 520 miteinander verbundenen wasserdurchlässigen flächigen Geweben geformt ist und eine äussere Kammer bildet. Die äussere Kammer ist mit einem ersten Inhalt befüllt. Auf einer Seite, in Fig. 6 ist dies die rechte Seite, weist die Getränkekartusche 50 eine flache beziehungsweise ebene Seite 530 auf. Diese ebene Seite 530 dient dazu, dass die Getränkekartusche 50 in einer vordefinierten Ausrichtung in der Kartuschenhalterung 320 angeordnet wird, so dass der auf der Getränkekartusche 50 angebrachte Code durch das Fenster 3270 hindurch lesbar ist.

In der äusseren Kammer der Getränkekartusche 50 ist weiter eine durch eine innere Hülle 540 gebildete innere Kammer angeordnet. Die innere Kammer ist mit einem zweiten Inhalt befüllt, der vor der Verarbeitung der Getränkekartusche 50 nicht mit dem ersten Inhalt gemischt werden soll. Die innere Hülle 540 ist ebenfalls aus einem wasserdurchlässigen Gewebe gebildet.

Fig. 7 zeigt eine Tablettenhalterung 420 eines fünften Ausführungsbeispiels einer Getränkezubereitungsvorrichtung, wobei der Rest der Getränkezubereitungsvorrichtung analog wie oben beschrieben ausgestaltet sein kann. Die Tablettenhalterung 420 ist zangenförmig mit einem Griff 4230 und einem Gabelabschnitt als Haltemittel ausgestaltet. Der Gabelabschnitt weist eine Tablettenaufnahme mit einem Sieb 4210 als Boden auf, das von einem Rand 4220 über weite Teile seines Umfangs abgeschlossen ist. In der Tablettenaufnahme kann eine im Wesentlichen kreisscheibenförmige Tablette 60 angeordnet werden, wobei das Sieb 4210 ermöglicht, dass die Tablette 60 einem Wasserstrom ausgesetzt ist und gelöst wird. Die Tablette 60 weist an seinem Rand einen Code 610 wie beispielsweise einen Barcode auf, der von der offenen Seite des Randes 4220 der Tablettenhalterung aus gelesen werden kann.

In Fig. 8 ist eine Tablettenhalterung 429 eines sechsten Ausführungsbeispiels einer Getränkezubereitungsvorrichtung gezeigt, wobei der Rest der Getränkezubereitungsvorrichtung analog wie oben beschrieben ausgestaltet sein kann. Die Tablettenhalterung 429 weist einen Körperabschnitt 4239 auf, in den als Haltemittel eine quadratische Tablettenaufnahme mit einem Sieb 4219 als Boden eingelassen ist. Das Sieb 4219 ist dabei rundherum von einem Rand 4229 abgeschlossen. In der Tablettenaufnahme kann eine im Wesentlichen kreisscheibenförmige Tablette 69 angeordnet werden, wobei das Sieb 4219 ermöglicht, dass die Tablette 69 einem Wasserstrom ausgesetzt ist und gelöst wird. Da die Tablette 69 in der Tablettenaufnahme der Tablettenhalterung 429 an seinem Umfang vom Rand 4229 abgedeckt ist, ist ein Code 619 wie beispielsweise ein Zahlen- oder Punktecode auf der Oberseite beziehungsweise auf der Unterseite der Tablette 69 lesbar angebracht.

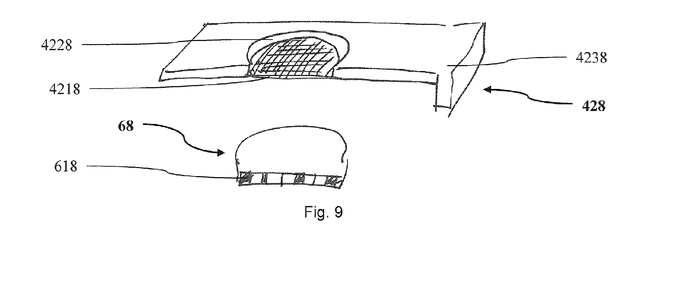

Fig. 9 zeigt eine Tablettenhalterung 428 eines siebten Ausführungsbeispiels einer Getränkezubereitungsvorrichtung, wobei der Rest der Getränkezubereitungsvorrichtung analog wie oben beschrieben ausgestaltet sein kann. Die Tablettenhalterung 428 weist einen Körperabschnitt 4238 auf, in den als Haltemittel eine kreissegmentförmige in einen Seitenrand des Körperabschnitts 4238 auslaufende Tablettenaufnahme mit einem Sieb 4218 als Boden eingelassen ist. Das Sieb 4218 ist dabei teilweise von einem Rand 4228 abgeschlossen. In der Tablettenaufnahme kann eine im Wesentlichen kreissegmentscheibenförmige Tablette 68 angeordnet werden, wobei das Sieb 4218 ermöglicht, dass die Tablette 68 einem Wasserstrom ausgesetzt ist und gelöst wird. Da die Tablette 69 kreissegmentscheibenförmig ausgestaltet ist, weist sie eine ebene oder flache Randseite auf, an der ein Code 618 angebracht ist. Die Tablette 68 wird so in der Tablettenaufnahme der Tablettenhalterung 428 angeordnet, dass die flache Randseite in einer Linie mit dem Seitenrand des Körperabschnitts 4238 liegt. Die Tablette 68 kann so einfach genau positioniert und ausgerichtet werden, so dass der Code 618 bei der eingelegten Tablette 68 von aussen gelesen werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

**1.** Getränkezubereitungsvorrichtung (1), die eine Kartuschenbrüheinheit (3) und eine Kartuschenhalterung (32; 320) umfasst, wobei die Kartuschenhalterung (32; 320) mit in der Kartuschenbrüheinheit (3) anordbaren Haltemitteln (3210, 3220, 3230, 3260) zum Halten einer Getränkekartusche (5; 50) versehen ist, **dadurch gekennzeichnet, dass** die Kartuschenbrüheinheit (3) einen mit einer Flüssigkeit befüllbaren Ziehbehälter (31) und eine Rühreinrichtung (330; 339) umfasst, wobei die Haltemittel (3210, 3220, 3230, 3260) der Kartuschenhalterung (32; 320) im Innern des Ziehbehälters (31) in einem Kartuschenbereich (311) des Ziehbehälters (31) anordbar sind und die Rühreinrichtung (330; 339) zum Verursachen einer Strömung im Kartuschenbereich (311) des Ziehbehälters (31) ausgestaltet ist.

**2.** Getränkezubereitungsvorrichtung (1) nach Anspruch 1, bei der die Rühreinrichtung (330; 339) ein Drehlager und einen Drehantrieb (3320, 3330, 3340) umfasst, wobei der Ziehbehälter (31) der Kartuschenbrüheinheit (3) auf dem Drehlager drehbar gelagert ist und der Ziehbehälter (31) mittels des Drehantriebs (3320, 3330, 3340) drehbar ist.

**3.** Getränkezubereitungsvorrichtung (1) nach Anspruch 1 oder 2, bei der die Rühreinrichtung (330; 339) einen im Ziehbehälter (31) angeordneten Rührer (3319) und einen Rührerantrieb (3329, 3339) zum Antreiben des Rührers (3319) umfasst.

**4.** Getränkezubereitungsvorrichtung (1) nach Anspruch 2 oder 3, bei der die Rühreinrichtung (330; 339) einen Strömungsbrecher (3310) umfasst, der an einer Innenseite eines Randes des Ziehbehälters (31) der Kartuschenbrüheinheit (3) angeordnet ist.

**5.** Getränkezubereitungsvorrichtung (1) nach einem der vorangehenden Ansprüche, bei der die Haltemittel (3210, 3220, 3230, 3260) der Kartuschenhalterung (32; 320) ein Gitter (3210) umfassen, auf dem die Getränkekartusche (5; 50) anordbar ist.

**6.** Getränkezubereitungsvorrichtung (1) nach einem der vorangehenden Ansprüche, bei der die Haltemittel (3210, 3220, 3230, 3260) der Kartuschenhalterung (32; 320) einen Klemmrahmen (3220) umfassen.

**7.** Getränkezubereitungsvorrichtung (1) nach einem der vorangehenden Ansprüche, die eine Tablettenbrüheinheit (4) mit einem Auflösebehälter (41) und einer im Innern des Auflösebehälters (41) ausgestalteten Tablettenaufnahme umfasst, wobei der Auflösebehälter (41) mit der Flüssigkeit befüllbar ist.

**8.** Getränkezubereitungsvorrichtung (1) nach Anspruch 7, die eine Tablettenhalterung (42; 420; 428; 429) mit Haltemitteln (4210, 4220; 4218, 4228; 4219, 4229) umfasst, wobei eine Tablette (6; 60; 68; 69) so durch die Haltemittel (4210, 4220; 4218, 4228; 4219, 4229) der Tablettenhalterung (42; 420; 428; 429) haltbar ist, dass die Tablette (6; 60; 68; 69) in der Tablettenaufnahme angeordnet ist.

**9.** Getränkezubereitungsvorrichtung (1) nach Anspruch 8, bei der die Haltemittel (4210, 4220; 4218, 4228; 4219, 4229) der Tablettenhalterung (42; 420; 428; 429) ein Sieb (4210; 4218; 4219) und einen Rand (4220; 4228; 4229) umfassen, wobei der Rand (4220; 4228; 4229) den Umfang des Siebs (4210; 4218; 4219) zumindest teilweise abschliesst und korrespondierend zur Tablette (6; 60; 68; 69) geformt ist.

**10.** Getränkezubereitungsvorrichtung (1) nach einem der vorangehenden Ansprüche, die eine Steuereinheit (8) und einen Kartuschencodeleser (34) umfasst, wobei der Kartuschencodeleser (34) so ausgestaltet ist, dass ein auf einer im Kartuschenbereich (311) des Ziehbehälters (31) angeordneten Getränkekartusche (5; 50) angebrachter Code mittels des Kartuschencodelesers (34) lesbar und an die Steuereinheit (8) übertragbar ist.

**11.** Getränkezubereitungsvorrichtung (1) nach einem der vorangehenden Ansprüche, die eine Steuereinheit (8) und einen Tablettencodeleser (43) umfasst, wobei der Tablettencodeleser (43) so ausgestaltet ist, dass ein auf einer in der Tablettenaufnahme des Lösebehälters (41) angeordnete Tablette (6; 60; 68; 69) angebrachter Code (610; 618; 619) mittels des Tablettencodelesers (43) lesbar und an die Steuereinheit (8) übertragbar ist.

**12.** Getränkezubereitungsvorrichtung (1) nach Anspruch 10 und 11, bei der die Steuereinheit (8) dazu ausgestaltet ist, den auf der Getränkekartusche (5; 50) angebrachten Code mit dem auf der Tablette (6; 60; 68; 69) angebrachten Code (610; 618; 619) zu vergleichen.

**13.** Getränkekartusche (5; 50) für eine Getränkezubereitungsvorrichtung (1) nach einem der vorangehenden Ansprüche, die eine auf die Haltemittel (3210, 3220, 3230, 3260) der Kartuschenhalterung (32; 320) der Getränkezubereitungsvorrichtung (1) angepasste äussere Form aufweist, so dass die Getränkekartusche (5; 50) in einer vordefinierten Ausrichtung an einer vordefinierten Position in der Kartuschenhalterung (32; 320) anordbar ist.

**14.** Getränkekartusche (5; 50) nach Anspruch 13, die einen von aussen lesbaren Code aufweist.

**15.** Getränkekartusche (5; 50) nach Anspruch 13 oder 14, die eine abgeschlossene äussere Kammer mit einem ersten Inhalt und eine abgeschlossene innere Kammer umfasst, wobei die innere Kammer vollständig innerhalb der äusseren Kammer liegt.
